# EUROPÄISCHE PATENTSCHRIFT

(11) **EP 0 852 661 B1**
(45) Veröffentlichungstag und Bekanntmachung des Hinweises auf die Patenterteilung: **13.12.2000**
(21) Anmeldenummer: 96941574.4
(22) Anmeldetag: 18.09.1996
(51) Int. Cl.: F01N 3/20, B01D 53/94

(54) **VERFAHREN SOWIE VORRICHTUNG ZUR DOSIERUNG DER EINGABE EINES REDUKTIONSMITTELS IN DEN ABGAS- ODER ABLUFTSTROM EINER VERBRENNUNGSANLAGE**
PROCESS AND DEVICE FOR METERING THE INTRODUCTION OF A REDUCING AGENT INTO THE WASTE GAS OR AIR STREAM OF A COMBUSTION UNIT
PROCEDE ET DISPOSITIF PERMETTANT DE DOSER LE VOLUME D'AGENT DE REDUCTION INTRODUIT DANS UN FLUX DE GAZ OU D'AIR D'ECHAPPEMENT D'UN SYSTEME DE COMBUSTION

(30) Priorität: 29.09.1995 DE 19536571
(43) Veröffentlichungstag der Anmeldung: 15.07.1998
(73) Patentinhaber: SIEMENS AKTIENGESELLSCHAFT, 80333 München (DE)
(72) Erfinder: DÖLLING, Winfried, D-96369 Weissenbrunn (DE)
(86) Internationale Anmeldenummer: DE9601769
(87) Internationale Veröffentlichungsnummer: WO9713055

(56) Entgegenhaltungen:
- EP-A- 0 498 598
- WO-A-95/04878
- DE-A- 3 337 793
- DE-A- 4 315 278
- PATENT ABSTRACTS OF JAPAN vol. 013, no. 308 (C-617), 14.Juli 1989 & JP 01 094924 A (MITSUBISHI HEAVY IND LTD), 13.April 1989,
- DATABASE WPI Section Ch, Week 9303 Derwent Publications Ltd., London, GB; Class E36, AN 93-021329 XP002027239 & JP 04 346 819 A (NIIGATA ENG CO LTD) , 2.Dezember 1992

## Beschreibung

Die Erfindung betrifft ein Verfahren mit den Merkmalen des Oberbegriffs des Patentanspruchs 1 sowie eine zugehörige Vorrichtung mit den Merkmalen des Oberbegriffs des Patentanspruchs 15.

Aus der DE 43 15 278 A1 ist ein Verfahren sowie eine zugehörige Vorrichtung zur Dosierung eines Reduktionsmittels in ein stickoxidhaltiges Abgas eines Verbrennungsmotors beschrieben, bei welcher die in den Abgasstrom eingebrachte Reduktionsmittelmenge über eine Kontrolleinheit in Abhängigkeit von betriebsrelevanten Parametern eingestellt wird. Hierdurch wird eine optimierte Reduktionsmittelmengendosierung vorgenommen, wodurch an einem Katalysator eine vollständige katalytische Umsetzung der Stickoxide erreicht wird und ein Reduktionsmittelschlupf vermieden werden soll.

Die betriebsrelevanten Parameter des Verbrennungsmotors, wie z.B. Regelstangenweg, Luftladedruck oder Motordrehzahl, werden dabei von der Kontrolleinheit mit Hilfe eines vorgegebenen und in die Kontrolleinheit implementierten funktionalen Zusammenhangs in Form eines Kennfeldes in eine Reduktionsmittelrate umgerechnet. Die betriebsrelevanten Parameter des Katalysators wie katalytische Aktivität oder Speicherkapazität werden ebenso in die Kontrolleinheit implementiert und zusätzlich zur Berechnung der Reduktionsmittelrate herangezogen. Eine Alterung des Katalysators wird berücksichtigt, indem entsprechend der Betriebsdauer des Verbrennungsmotors die betriebsrelevanten Parameter des Katalysators entsprechend in Laborversuchen ermittelten Alterungskurven verändert werden.

Eine Änderung des funktionalen Zusammenhangs des Verbrennungsmotors durch Alterung, Verschleiß oder geänderte Betriebsbedingungen wird von dem vorgestellten Verfahren nicht berücksichtigt.

Auch in der DE 33 37 793 C2 ist ein Verfahren zur Dosierung eines Reduktionsmittels in ein stickoxidhaltiges Abgas einer Verbrennungsanlage beschrieben. Einer Alterung des zum Abbau der Stickoxide verwendeten Katalysators wird hier begegnet, indem eine Stöchiometrie-Kurve, welche den Zusammenhang zwischen Stickoxid- und Reduktionsmittelkonzentration beschreibt, entsprechend verschoben wird.

Bei beiden Verfahren wird jedoch eine nicht-optimale Reduktionsmittelmenge zudosiert, wenn sich die zur Ermittlung des funktionalen Zusammenhangs zwischen den betriebsrelevanten Parametern und der zu dosierenden Reduktionsmittelmenge herangezogenen Kenngrößen des Verbrennungsmotors bzw. der Verbrennungsanlage einschließlich des Katalysators unvorhersehbar ändern.

Aus der WO 95/04878 ist eine Verbrennungsanlage mit einem virtuellen Sensor-Netzwerk bekannt, welches Betriebsparameter der Verbrennungsanlage empfängt und in ein Ausgangssignal für die Konzentration eines ermittierten Schadstoffes umwandelt. Das virtuelle Sensor-Netzwerk wird mit Hilfe eines Schadstoff-Sensors im Abgas der Verbrennungsanlage trainiert, so daß es als ein virtueller Sensor arbeitet. Der virtuelle Sensor gibt dann während des Betriebs der Verbrennungsanlage anhand der betriebsrelevanten Parameter eine Vorhersage für die Konzentration des emittierten Schadstoffs. In regelmäßigen Zeitabständen wird überprüft, ob die Vorhersage für die Konzentration des Schadstoffs übereinstimmt mit der tatsächlichen Emission des Schadstoffs, welche mit dem Schadstoff-Sensor gemessen wird. Bei einer Abweichung über einem vorgegebenen Sollwert wird das virtuelle Sensor-Netzwerk erneut trainiert. Auf diese Weise werden auch Alterungserscheinungen der Verbrennungsanlage berücksichtigt.

Aus der EP 0 498 598 A1 ist ein Verfahren zur Reinigung des Abgases eines Verbrennungsmotors bekannt. Der zur Ermittlung der Eingabemenge eines Reduktionsmittels herangezogene funktionale Zusammenhang wird an die aktuellen Betriebsbedingungen angepaßt.

Der Erfindung liegt die Aufgabe zugrunde, ein Verfahren sowie eine zugehörige Vorrichtung zur Dosierung der Eingabemenge eines Reduktionsmittels anzugeben, wodurch auch bei durch Alterung oder Verschleiß unvorhersehbaren Änderungen der Kenngrößen einer Verbrennungsanlage zum Abbau von Schadstoffen eine optimierte Reduktionsmittelmengendosierung sichergestellt ist.

Die Aufgabe wird für das Verfahren erfindungsgemäß durch den kennzeichnenden Teil des Patentanspruchs 1 in Verbindung mit dem Oberbegriff gelöst. Vorteilhafte Ausführungsformen des Verfahrens werden durch die Unteransprüche 2 - 14 realisiert. Hinsichtlich der Vorrichtung wird die Aufgabe erfindungsgemäß durch den kennzeichnenden Teil des Patentanspruchs 15 in Verbindung mit dem Oberbegriff gelöst. Es schließt eine vorteilhafte Ausführungsform der Vorrichtung in dem Patentanspruch 16 an.

Im Gegensatz zum Stand der Technik ermöglicht das erfindungsgemäße Verfahren eine Ermittlung und Berücksichtigung von über die betriebsrelevanten Parameter hinausgehenden Größen bei der Feststellung einer optimierten Reduktionsmitteleingabemenge. Zu diesen zusätzlichen Größen zählen u.a. der Alterungszustand, der Verschleißzustand sowie sonstige außergewöhnliche Betriebsbedingungen. Es wird damit dem Umstand Rechnung getragen, daß der zur Ermittlung einer optimalen Reduktionsmittelmenge verwendete funktionale Zusammenhang zwischen den betriebsrelevanten Parametern und der zu dosierenden Reduktionsmittelmenge in Form einer Kennlinie oder eines Kennlinienfeldes, nicht statisch oder vorab in einem Laborversuch ermittelbar ist, sondern im praktischen Betrieb von Verbrennungsanlagen einen dynamischen und regelmäßig zu überprüfenden und wieder neu festzulegenden Charakter besitzt.

Das erfindungsgemäße Verfahren stellt somit im praktischen und langjährigen Betrieb von Verbrennungsanlagen eine an die aktuellen und tatsächlichen Betriebsbedingungen weitgehend angepaßte und sich selbständig anpassende Methode zum Betrieb von Verbrennungsanlagen dar, wodurch sich aufgrund der optimierten Reduktionsmittelmenge ein günstiger Verbrauch an Reduktionsmittel und ein optimaler Betriebsarbeitspunkt der Verbrennungsanlage einstellt.

Im folgenden wird unter einem funktionalen Zusammenhang eine Kennlinie oder ein Kennlinienfeld verstanden.

Die Überprüfung und Anpassung des funktionalen Zusammenhanges kann nun zum einen manuell und nach Bedarf erfolgen (z.B. bei einer Umstellung der Verbrennungsanlage) oder kann (periodisch) selbsttätig durch in das System der Verbrennungsanlage integrierte Zusatzeinheiten ausgeführt werden.

Indem neben den bereits üblicherweise berücksichtigten betriebsrelevanten Parametern auch aktuelle Zustandsgrößen und die aktuellen Betriebsbedingungen der Verbrennungsanlage berücksichtigt werden, erfolgt eine Abbildung der Verbrennungsanlage als Gesamtsystem, welches alle für den Betrieb der Verbrennungsanlage zu berücksichtigenden Faktoren bei der Ermittlung der optimalen Reduktionsmitteleingabemenge berücksichtigt.

Das erfindungsgemäße Verfahren hinterfragt sich durch regelmäßige Überprüfung und Anpassung selbst und verharrt somit nicht in einem nur für einen bestimmten und allgemeinen oder entsprechend der Betriebsdauer der Verbrennungsanlage postulierten hypothetischen Zustand geltenden funktionalen Zusammenhang.

Erfindungsgemäß kann die Anpassung des funktionalen zusammenhangs zum einen durch Korrekturfaktoren erfolgen. Im einfachsten Fall einer durch eine bestimmte Eingangsgröße und durch die Ausgangsgröße Reduktionsmittelmenge gekennzeichneten Kennlinie kann durch Einführung eines Korrekturfaktors der jeder Eingangsgröße zugewiesene Ausgangswert durchgängig um einen Korrekturfaktor erhöht oder erniedrigt werden.

Bei einem komplexeren funktionalen Zusammenhang können auch einzelne Parameter und Gewichte der Funktionsgleichung der Kennlinien einzeln oder kumuliert verändert werden. In analoger Weise wird bei der Anpassung eines Kennlinienfeldes eine separate oder kumulierte Anpassung der mit den einzelnen Eingangsgrößen in Zusammenhang stehenden Beziehungen oder funktionalen Bestandteilen des Gesamtgleichungssystems vorgenommen.

Im einfachsten Fall eines lediglich eine Eingangsgröße umfassenden funktionalen Zusammenhangs kann durch Einführung eines Korrekturfaktors in Form eines additiven oder subtraktiven Zuschlags beispielsweise eine Verschiebung der den funktionalen Zusammenhang beschreibenden Kennlinie stattfinden.

Erfindungsgemäß wird weiter vorgeschlagen, die Anpassung des funktionalen Zusammenhangs unter Zuhilfenahme von numerischen Methoden vorzunehmen. Im einfachsten Fall einer wiederum eine einzige Eingangsgröße umfassenden Kennlinie können beispielsweise der Anfangs- und Endpunkt eines beispielsweise parabelförmigen Bereichs der Kennlinie auch für eine neue korrigierte Kennlinie verwendet werden, während zwischen dem Anfangs- und Endbereich der Ausgangskennlinie eine Ermittlung neuer Funktionszwischenwerte (beispielsweise durch Interpolation) erfolgt. In analoger Weise wären bei mehrdimensionalen Kennlinien(-feldern) geeignete numerische Methoden oder Mehrfachinterpolationen durchzuführen.

Zur Anpassung des funktionalen Zusammenhangs nach dem erfindungsgemäßen Verfahren kann es weiterhin vorteilhaft sein, eine Vielzahl mathematischer Methoden (also z.B. auch eine Kombination numerischer Methoden mit einer einfachen Korrekturfaktorbestimmung) zu verwenden.

In dem erfindungsgemäßen Verfahren wird die zugeführte Reduktionsmittelmenge über den tatsächlich benötigten Bedarf an Reduktionsmittel hinaus erhöht, wodurch sich ein definierter Reduktionsmittelschlupf (also Reduktionsmittelüberschuß) einstellt, der durch geeignete Sensorelemente, z. B. einem NH₃-Sensor erfaßt und gesteuert wird.

Ausgehend von diesem Zustand des Reduktionsmittelschlupfes wird durch Verwendung der Größen Reduktionsmittelschlupf, aktuelle Zustandsgrößen und betriebsrelevante Parameter ein optimaler Arbeitspunkt der Verbrennungsanlage errechnet. Falls dieser errechnete Arbeitspunkt von dem tatsächlichen Arbeitspunkt der Verbrennungsanlage (vor Erzeugung des Reduktionsmittelschlupfes) abweicht, erfolgt eine Anpassung des funktionalen Zusammenhangs, um auch nach Beseitigung des erzeugten Reduktionsmittelschlupfes einen optimierten Arbeitspunkt der Verbrennungsanlage zu erreichen.

Unabhängig davon kann eine Anpassung des funktionalen Zusammenhangs wie geschildert durch verschiedene Methoden oder Kombinationen von Methoden erfolgen.

Generell ist vorteilhafterweise die Anpassung des funktionalen Zusammenhangs durch Sicherungs- und Überwachungsfunktionen des Gesamtbetriebsverhaltens der Verbrennungsanlage von Sicherungs- und Überwachungsfunktionen begleitet, um auch während der Anpassung eine stabile und kontrollierte Betriebssituation der Verbrennungsanlage sicherzustellen.

Wie bereits geschildert, erfaßt das erfindungsgemäße Verfahren neben den aktuellen Zustandsgrößen (z.B. Alterung oder Verschleiß) oder den aktuellen Betriebsbedingungen (z.B. außergewöhnlichen Lastsituationen) auch herkömmliche betriebsrelevante Parameter. Beispielsweise werden als betriebsrelevante Parameter des Verbrennungsmotors u.a. der Luftmassenstrom, die Gaspedalstellung, der Ladedruck und die Motordrehzahl berücksichtigt.

Hinsichtlich der betriebsrelevanten Parameter des Abgases fließen u.a. dessen Temperatur, Druck, Massenstrom und Schadstoffkonzentration ein. Als betriebsrelevante Parameter eines für die Schadstoffreduzierung verwendeten Katalysators finden u.a. dessen Temperatur, katalytische Aktivität, das Gewicht der katalytisch aktiven Masse, die Geometrie, der Wärmeübergang und die spezifische temperaturabhängige Speicherkapazität für das Reduktionsmittel Eingang in das erfindungsgemäße Verfahren.

Zur Herstellung eines definierten Ausgangszustandes vor der Inbetriebnahme der Verbrennungsanlage mit einem Katalysator wird der Katalysator vorteilhafterweise durch Einleiten der Abgase eines Blaubrenners von Reduktionsmittel gereinigt.

Die erfindungsgemäße Vorrichtung zur Dosierung der Eingabemenge eines Reduktionsmittels in den Abgas- oder Abluftstrom von Verbrennungsanlagen und zur Durchführung des erfindungsgemäßen Verfahrens zeichnet sich u.a. durch Sensorelemente aus, die (neben den üblicherweise ermittelten betriebsrelevanten Parametern) auch den aktuellen Zustand sowie die aktuellen Betriebsbedingungen der gesamten Verbrennungsanlage und insbesondere des Verbrennungsmotors, des Abgases, des Katalysators und einen Reduktionsmittelschlupf ermitteln.

Zusätzlich weist die erfindungsgemäße Vorrichtung eine Zentraleinheit auf, welche mit den Sensorelementen verbunden ist und in welcher durch Berechnung die Eingabemenge des Reduktionsmittels mit Hilfe des funktionalen Zusammenhangs bestimmt werden kann. Insbesondere wird durch die Zentraleinheit auch eine Anpassung und Überprüfung des funktionalen Zusammenhangs in Abhängigkeit von dem durch die Sensorelemente erfaßten Meßwerten möglich, wodurch von den Sensorelementen gemeldete Verschleißparameter oder Alterungsparameter in der geschilderten Art und Weise berücksichtigt werden.

Zusätzlich wird die Zentraleinheit vorteilhafterweise zur Gesamtsteuerung und Überwachung des Verbrennungsmotors, des Katalysators, der Reduktionsmittelzuführung sowie sonstiger zur Verbrennungsanlage gehörender Aggregate verwendet und beinhaltet die auch bei der Anpassung des funktionalen Zusammenhangs zu beachtende Sicherungs- und Überwachungsfunktionen.

Die Erfindung ist anhand von Ausführungsbeispielen in den Zeichnungsfiguren näher erläutert. Es zeigen:
- FIG 1: eine schematische Gesamtdarstellung der erfindungsgemäßen Vorrichtung,
- FIG 2: ein Beispiel des erfindungsgemäßen Verfahrens sowie
- FIG 3: ein Beispiel für die Anpassung der Kennlinie durch Interpolation.

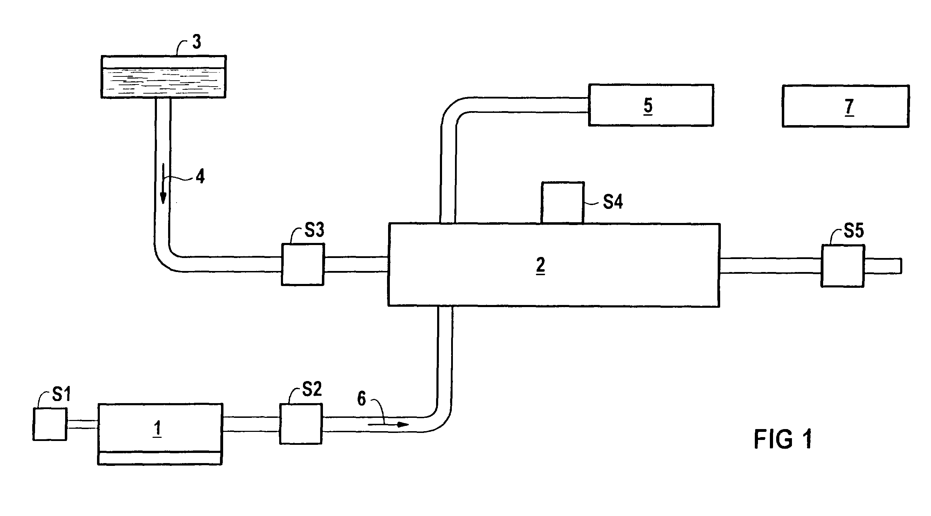

FIG 1 zeigt ein beispielhaftes Gesamtsystem einer Verbrennungsanlage mit einem Verbrennungsmotor 1, dessen Abgase 6 in einen Katalysator 2 zur Reinigung eingeleitet werden. In den Katalysator 2 werden zusätzlich im Reduktionsmittelbehälter 3 gelagertes Reduktionsmittel 4 sowie bei Bedarf die Abgase einer Blaubrennereinrichtung 5 eingeleitet. An verschiedenen Stellen der Gesamtanlage sind Sensorelemente S₁ - S₅ sowohl zur Ermittlung betriebsrelevanter Parameter als auch zur Bestimmung der aktuellen Zustände und aktuellen Betriebsbedingungen der Gesamtanlage angebracht. Die Anpassung des funktionalen Zusammenhangs geschieht über die Zentraleinheit 7, welche zur Steuerung mit allen Systemkomponenten in Verbindung steht und u.a. die von den Sensorelementen S₁ - S₅ ermittelten Meßwerte erfaßt und verarbeitet.

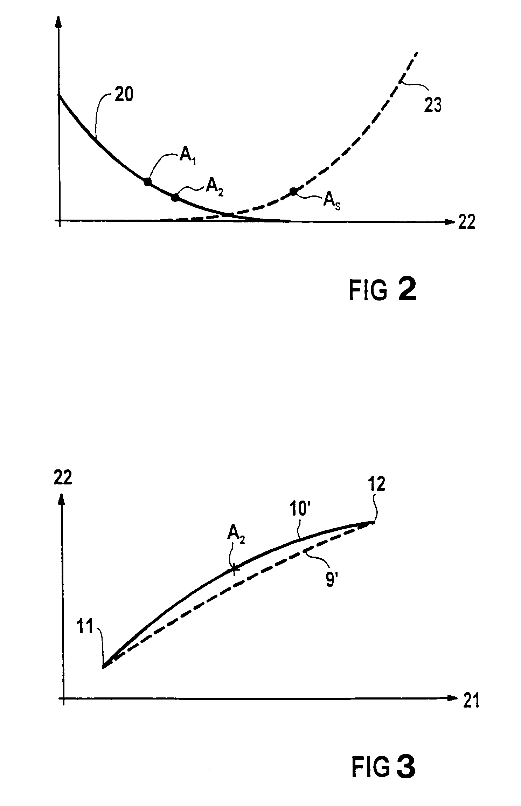

Eine Variante des erfindungsgemäßen Verfahrens ist in den FIG 2 und 3 dargestellt. Zunächst wird die Verbrennungsanlage im Arbeitspunkt A₁ nach FIG 2 betrieben.

Durch Erhöhen der Reduktionsmittelmenge 22 unter Überwachung eines geeigneten Sensorelementes (z.B. eines NH₃-Sensors) und Herstellen eines Reduktionsmittelschlupfes 23 bei gleichzeitiger Abnahme der Schadstoffkonzentration 20 wird der Arbeitspunkt A_{S} angepeilt. Ausgehend von diesem Arbeitspunkt A_{S} werden unter Zuhilfenahme des vorliegenden Reduktionsmittelschlupfes 23, der betriebsrelevanten Parameter, aktueller Zustandsgrößen und der aktuellen Betriebsbedingungen Berechnungen durchgeführt, welche eine optimierte Reduktionsmittelmenge und damit einen optimierten Arbeitspunkt A₂ für den Betriebszustand vor der Korrekturfahrt ergeben.

Im einfachsten Fall wird die im Schlupfzustand vorliegende Reduktionsmittelmenge 22 um einen empirischen Faktor korrigiert, wodurch die optimierte Reduktionsmittelmenge 22 für den Betriebszustand vor der Korrekturfahrt bestimmt wird. Dies geschieht unter der Annahme eines in Bezug zur Reduktionsmittelmenge 22 geringen Reduktionsmittelüberschusses.

Im vorliegenden Fall unterscheidet sich der optimierte Arbeitspunkt A₂ von dem ursprünglichen Arbeitspunkt A₁. Es ist deshalb erforderlich, die zum Betrieb im ursprünglichen Arbeitspunkt A₁ verwendete Kennlinie 9' nach FIG 3 anzupassen. Dies geschieht im Fall von FIG 3 durch Übernahme des Anfangspunktes 11 und des Endpunktes 12 der Ausgangskennlinie 9' und durch Berechnung einer neuen, durch den Arbeitspunkt A₂ hindurchführenden angepaßten Kennlinie 10' (z.B. unter Verwendung eines Interpolationsverfahrens zur Ermittlung der Zwischenwerte zwischen Anfangspunkt 11, Arbeitspunkt A₂ und Endpunkt 12).

Im weiteren Verlauf wird die Verbrennungsanlage im Betriebspunkt A₂ betrieben und es erfolgt eine Bestimmung der Reduktionsmittelmenge nach der angepaßten Kennlinie 10', welche eben auch aktuelle Zustandsgrößen und aktuelle Betriebsgrößen der Verbrennungsanlage berücksichtigt.

## Patentansprüche

1. Verfahren zur Dosierung der Eingabemenge eines Reduktionsmittels (4) in den Abgas- oder Abluftstrom einer Verbrennungsanlage, insbesondere eines Verbrennungsmotors (1), wobei die Eingabemenge des Reduktionsmittels anhand einer Kennlinie oder eines Kennlinienfeldes, aus betriebsrelevanten Parametern der Verbrennungsanlage, des Abgases (6) und gegebenenfalls eines zur Schadstoffreduzierung verwendeten Katalysators (2) bestimmt wird, wobei die Kennlinie oder das Kennlinienfeld gegebenenfalls an den aktuellen Zustand des Katalysators (2) angepaßt wird,
**gekennzeichnet dadurch,** daß die Kennlinie oder das Kennlinienfeld während des Betriebs überprüft und zusätzlich an den aktuellen Zustand sowie die aktuellen Betriebsbedingungen der Verbrennungsanlage angepaßt wird, indem die Kennlinie oder das Kennlinienfeld bezüglich der betriebsrelevanten Parameter der Verbrennungsanlage geändert wird, und durch folgende Merkmale:
a) Erhöhung der zugeführten Reduktionsmittelmenge und Erzeugung eines definierten Reduktionsmittelschlupfes,
b) Berechnung des Arbeitspunktes der Verbrennungsanlage durch Verwendung des definierten Reduktionsmittelschlupfes, aktueller Zustandsgrößen und betriebsrelevanter Parameter,
c) Anpassung der Kennlinie oder des Kennlinienfeldes zur Bestimmung der zuzuführenden Reduktionsmittelmenge, falls der berechnete Arbeitspunkt vom durch die ursprüngliche Kennlinie oder vom durch das ursprüngliche Kennlinienfeld festgelegten momentanen Arbeitspunkt abweicht.

2. Verfahren nach Anspruch 1,
**dadurch gekennzeichnet,** daß die Überprüfung und Anpassung der Kennlinie oder des Kennlinienfeldes nach Bedarf erfolgt.

3. Verfahren nach Anspruch 1 oder 2,
**dadurch gekennzeichnet,** daß die Überprüfung und Anpassung der Kennlinie oder des Kennlinienfeldes selbsttätig erfolgt.

4. Verfahren nach Anspruch 3,
**dadurch gekennzeichnet,** daß die Kennlinie oder das Kennlinienfeld selbsttätig und periodisch überprüft und angepaßt wird.

5. Verfahren nach einem der Ansprüche 1 bis 4,
**dadurch gekennzeichnet,** daß die Anpassung der Kennlinie oder des Kennlinienfeldes durch einen Korrekturfaktor erfolgt.

6. Verfahren nach Anspruch 5,
**dadurch gekennzeichnet,** daß der Korrekturfaktor ein additiver oder ein subtraktiver Zuschlag für einen betriebsrelevanten Parameter ist.

7. Verfahren nach einem der Ansprüche 1 bis 6,
**dadurch gekennzeichnet,** daß die Anpassung der Kennlinie oder des Kennlinienfeldes mit Hilfe einer numerischen Methode erfolgt.

8. Verfahren nach Anspruch 7,
**dadurch gekennzeichnet**, daß die Anpassung der Kennlinie oder des Kennlinienfeldes durch eine Interpolation erfolgt.

9. Verfahren nach einem der Ansprüche 1 bis 8,
**dadurch gekennzeichnet,** daß der Reduktionsmittelschlupf durch ein Sensorelement, insbesondere einen NH3-Sensor, erfaßt und überwacht wird.

10. Verfahren nach einem der Ansprüche 1 bis 9,
**dadurch gekennzeichnet,** daß eine Anpassung der Kennlinie oder des Kennlinienfeldes durch eine Sicherungs- und/oder Überwachungsfunktion ermöglicht bzw. unterbunden wird.

11. Verfahren nach einem der Ansprüche 1 bis 10,
**dadurch gekennzeichnet,** daß die Verbrennungsanlage ein Verbrennungsmotor (1) ist, und daß als betriebsrelevante Parameter des Verbrennungsmotors (1) die Parameter Luftmassenstrom und/oder Gaspedalstellung und/oder Ladedruck und/oder Motordrehzahl verwendet werden.

12. Verfahren nach einem der Ansprüche 1 bis 11,
**dadurch gekennzeichnet,** daß als betriebsrelevante Parameter des Abgases (6) dessen Temperatur und/oder Druck und/oder Massenstrom und/oder Schadstoffkonzentration verwendet werden.

13. Verfahren nach einem der Ansprüche 1 bis 12,
**dadurch gekennzeichnet,** daß als betriebsrelevante Parameter des Katalysators (2) dessen Temperatur und/oder katalytische Aktivität und/oder Gewicht der katalytisch aktiven Masse und/oder Geometrie und/oder Wärmeübergang und/oder spezifische Speicherkapazität für das Reduktionsmittel (4) dienen.

14. Verfahren nach einem der Ansprüche 1 bis 13,
**dadurch gekennzeichnet,** daß der Katalysator (2) vor dem Anlaufen der Verbrennungsanlage durch Blaubrennen vom Reduktionsmittel (4) gereinigt wird.

15. Vorrichtung zur Dosierung der Eingabe eines Reduktionsmittels (4) in den Abgas- oder Abluftstrom einer Verbrennungsanlage gemäß dem Verfahren nach einem der Ansprüche 1 bis 14, wobei die Eingabemenge des Reduktionsmittels (4) anhand einer Kennlinie oder eines Kennlinienfeldes aus betriebsrelevanten Parametern der Verbrennungsanlage, des Abgases (6) und gegebenenfalls eines zur Schadstoffreduzierung verwendbaren Katalysators (2) ermittelt wird, wobei die Kennlinie oder das Kennlinienfeld gegebenenfalls an den aktuellen Zustand des Katalysators (2) angepaßt wird,
**dadurch gekennzeichnet,** daß Sensorelemente (S) zur Ermittlung des aktuellen Zustands sowie der aktuellen Betriebsbedingungen der Verbrennungsanlage (1), des Abgases (6) und gegebenenfalls des Katalysators (2) sowie zur Ermittlung eines Reduktionsmittelschlupfes und eine mit den Sensorelementen (S) verbundene Zentraleinheit (7) vorgesehen sind.

16. Vorrichtung nach Anspruch 15,
**dadurch gekennzeichnet,** daß die Zentraleinheit (7) zur Gesamtsteuerung und Überwachung der Verbrennungsanlage, des Katalysators (2), der Reduktionsmittelzuführung sowie sonstiger zur Verbrennungsanlage gehörender Aggregate dient.

## Claims

1. Method for metering the quantity of a reducing agent (4) introduced into the exhaust-gas or exhaust-air stream of a combustion installation, in particular an internal combustion engine (1), the quantity of reducing agent introduced being determined using a characteristic curve or characteristic map, from operation-relevant parameters of the combustion installation, the exhaust gas (6) and, if appropriate, a catalytic converter (2) used for pollutant reduction, the characteristic curve or the characteristic map being adopted, if appropriate, to the current state of the catalyst converter (2), characterized in that the characteristic curve or the characteristic map is checked during operation and in addition adapted to the current state and to the current operating conditions of the combustion installation by the characteristic curve or the characteristic map being changed with regard to the operation-relevant parameters of the combustion installation,
and by the following features:
a) increasing the quantity of reducing agent supplied and production of a defined reducing-agent slip,
b) calculation of the operating point of the combustion installation by the use of the defined reducing-agent slip, current state variables and operation-relevant parameters,
c) adaptation of the characteristic curve or of the characteristic map for determining the quantity of reducing agent to be supplied if the calculated operating point differs from the instantaneous operating point determined by the original characteristic curve or by the original characteristic map.

2. Method according to Claim 1, characterized in that the checking and adaptation of the characteristic curve or characteristic map is performed as required.

3. Method according to Claim 1 or 2, characterized in that the checking and adaptation of the characteristic curve or characteristic map takes place automatically.

4. Method according to Claim 3, characterized in that the characteristic curve or the characteristic map is automatically checked and adapted at periodic intervals.

5. Method according to one of Claims 1 to 4, characterized in that the adaptation of the characteristic curve or characteristic map is effected by means of a correction factor.

6. Method according to Claim 5, characterized in that the correction factor is an additive or subtractive supplement to an operation-relevant parameter.

7. Method according to one of Claims 1 to 6, characterized in that the adaptation of the characteristic curve or characteristic map is effected with the aid of a numerical method.

8. Method according to Claim 7, characterized in that the adaptation of the characteristic curve or characteristic map is effected by means of an interpolation.

9. Method according to one of claims 1 to 8, characterized in that the reducing-agent slip is detected and monitored by a sensor element, in particular a NH₃ sensor.

10. Method according to one of Claims 1 to 9, characterized in that adaptation of the characteristic curve or of the characteristic map is made possible or prevented by a safety and/or monitoring function.

11. Method according to one of Claims 1 to 10, characterized in that the combustion installation is an internal combustion engine (1) and in that the parameters air mass flow and/or accelerator pedal position and/or boost pressure and/or engine speed are used as operation-relevant parameters of the internal combustion engine (1).

12. Method according to one of Claims 1 to 11, characterized in that the temperature and/or pressure and/or mass flow and/or pollutant concentration of the exhaust gas (6) are used as operation-relevant parameters of the exhaust gas.

13. Method according to one of Claims 1 to 12, characterized in that the temperature and/or catalytic activity and/or weight of the catalytically active mass and/or geometry and/or heat transfer and/or specific storage capacity for the reducing agent (4) of the catalytic converter (2) are used as operation-relevant parameters of the catalytic converter (2).

14. Method according to one of Claims 1 to 13, characterized in that the catalytic converter (2) is purged of the reducing agent (4) by blue-flame burning before start-up of the combustion installation.

15. Apparatus for metering the introduction of a reducing agent (4) into the exhaust-gas or exhaust-air stream of a combustion installation in accordance with the method according to one of Claims 1 to 14, the quantity of reducing agent (4) introduced being determined using a characteristic curve or characteristic map, from operation-relevant parameters of the combustion installation, the exhaust gas (6) and, if appropriate, a catalytic converter (2) used for pollutant reduction, the characteristic curve or the characteristic map being adopted, if appropriate, to the current state of the catalytic converter (2), characterized in that sensor elements (S) for determining the current state and the current operating conditions of the combustion installation (1), of the exhaust gas (6) and, if required, of the catalytic converter (2) and for determining a reducing-agent slip and a central unit (7) connected to the sensor elements (S) are provided.

16. Apparatus according to Claim 15, characterized in that the central unit (7) is used for the overall control and the monitoring of the combustion installation, the catalytic converter (2), the supply of reducing agent and other units belonging to the combustion installation.

## Revendications

1. Procédé de réglage de la quantité d'agent (4) réducteur qui est introduite dans le courant de gaz ou d'air d'échappement d'un système de combustion, notamment d'un moteur (1) à combustion, la quantité d'agent réducteur qui est introduite étant déterminée au moyen d'une courbe caractéristique ou d'une famille de courbes caractéristiques à partir de paramètres du système de combustion qui sont pertinents pour le fonctionnement, du gaz (6) d'échappement et, le cas échéant, d'un pot (2) catalytique utilisé pour la réduction des substances polluantes, la courbe caractéristique ou la famille de courbes caractéristiques étant adaptée éventuellement à l'état actuel du pot (2) catalytique,
caractérisé en ce que la courbe caractéristique ou la famille de courbes caractéristiques est vérifiée pendant le fonctionnement et en outre est adaptée à l'état actuel ainsi qu'aux conditions actuelles de fonctionnement du système de combustion, en modifiant la courbe caractéristique ou la famille de courbes caractéristiques pour ce qui concerne les paramètres du système de combustion qui sont pertinents pour le fonctionnement, et par les caractéristiques suivantes :
a) augmentation de la quantité d'agent réducteur apportée et production d'un excès d'agent réducteur défini,
b) calcul du point de travail du système de combustion par utilisation de l'excès défini d'agent réducteur, des grandeurs d'état actuelles et des paramètres qui sont pertinents pour le fonctionnement,
c) adaptation de la courbe caractéristique ou de la famille de courbes caractéristiques pour la détermination de la quantité d'agent réducteur à apporter dans le cas où le point de travail calculé s'écarte du point de travail instantané fixé par la courbe caractéristique initiale ou par la famille de courbes caractéristiques initiale.

2. Procédé suivant la revendication 1,
caractérisé en ce qu'il consiste à effectuer la vérification et l'adaptation de la courbe caractéristique ou de la famille de courbes caractéristiques suivant les besoins.

3. Procédé suivant la revendication 1 ou 2,
caractérisé en ce qu'il consiste à effectuer la vérification et l'adaptation de la courbe caractéristique ou de la famille de courbes caractéristiques d'une manière automatique.

4. Procédé suivant la revendication 3,
caractérisé en ce qu'il consiste à vérifier et adapter automatiquement et périodiquement la courbe caractéristique ou la famille de courbes caractéristiques.

5. Procédé suivant l'une des revendications 1 à 4,
caractérisé en ce qu'il consiste à effectuer l'adaptation de la courbe caractéristique ou de la famille de courbes caractéristiques par un facteur de correction.

6. Procédé suivant la revendication 5,
caractérisé en ce que le facteur de correction est un complément additif ou un complément soustractif pour un paramètre qui est pertinent pour le fonctionnement.

7. Procédé suivant l'une des revendications 1 à 6,
caractérisé en ce qu'il consiste à effectuer l'adaptation de la courbe caractéristique ou de la famille de courbes caractéristiques à l'aide d'une méthode numérique.

8. Procédé suivant la revendication 7,
caractérisé en ce qu'il consiste à effectuer l'adaptation de la courbe caractéristique ou de la famille de courbes caractéristiques par une interpolation.

9. Procédé suivant l'une des revendications 1 à 8,
caractérisé en ce qu'il consiste à relever et à surveiller l'excès d'agent réducteur par l'élément capteur, notamment par le capteur de NH₃.

10. Procédé suivant l'une des revendications 1 à 9,
caractérisé en ce qu'une adaptation de la courbe caractéristique ou de la famille de courbes caractéristiques est permise ou supprimée par une fonction de sécurité et/ou de surveillance.

11. Procédé suivant l'une des revendications 1 à 10,
caractérisé en ce que le système de combustion est un moteur (1) à combustion et en ce que l'on utilise comme paramètres du moteur (1) à combustion qui sont pertinents pour le fonctionnement le courant massique d'air et/ou la position de la pédale des gaz et/ou de la pression de suralimentation et/ou le régime du moteur.

12. Procédé suivant l'une des revendications 1 à 11,
caractérisé en ce qu'il consiste à utiliser comme paramètre du gaz (6) d'échappement qui est pertinent pour le fonctionnement sa température et/ou sa pression et/ou son courant massique et/ou sa concentration en substance polluante.

13. Procédé suivant l'une des revendications 1 à 12,
caractérisé en ce qu'il consiste à se servir comme paramètre du pot (2) catalytique qui est pertinent pour le fonctionnement, sa température et/on son activité catalytique et/ou le poids de la masse catalytiquement active et/ou sa géométrie et/ou son transfert de chaleur et/ou sa capacité spécifique d'accumulation de l'agent (4) réducteur.

14. Procédé suivant l'une des revendications 1 à 13,
caractérisé en ce qu'il consiste à nettoyer le pot (2) catalytique avant le démarrage du système de combustion par combustion de l'agent (4) réducteur.

15. Dispositif de réglage de l'introduction d'un agent (4) réducteur dans le courant de gaz ou d'air d'échappement d'un système de combustion suivant le procédé de l'une des revendications 1 à 14, la quantité d'agent (4) réducteur introduite étant déterminée au moyen d'une courbe caractéristique ou d'une famille de courbes caractéristiques constituée à partir de paramètres, qui sont pertinents pour le fonctionnement, du système de combustion du gaz (6) d'échappement et le cas échéant d'un pot (2) catalytique qui peut être utilisé pour réduire les substances polluantes, la courbe caractéristique ou la famille de courbes caractéristiques étant éventuellement adaptée à l'état actuel du pot (2) catalytique,
caractérisé en ce qu'il est prévu des éléments capteurs (S) de détermination de l'état actuel ainsi que des conditions actuelles de fonctionnement du système (1) de combustion du gaz (6) d'échappement et le cas échéant du pot (2) catalytique ainsi que de détermination d'un excès d'agent réducteur et une unité (7) centrale reliée aux éléments capteurs (S).

16. Dispositif suivant la revendication 15,
caractérisé en ce que l'unité (7) centrale sert à la commande globale et à la surveillance du système de combustion, du pot (2) catalytique, de l'apport d'agent réducteur ainsi que d'autres ensembles faisant partie du système de combustion.
